# EUROPEAN PATENT APPLICATION

(11) **EP 4 744 955 A1**
(43) Date of publication of application: **20.05.2026**
(21) Application number: 24842367.5
(22) Date of filing: 16.07.2024
(51) Int. Cl.: B60N 2/04, B60N 2/14

(54) **VEHICLE SEAT SYSTEM AND VEHICLE**

(30) Priority: 17.07.2023 CN 202310880960
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHANG, Bin, Ningbo, Zhejiang 315899 (CN)
(74) Representative: Michalski Hüttermann & Partner Patentanwälte mbB
(86) International application number: PCT/CN2024/105665
(87) International publication number: WO 2025/016378

(57) **Abstract**

A vehicle seat system and a vehicle. The vehicle seat system (10) includes a seat (100), a limiting assembly (200), a limiting sensor (300), and a control device (400). The seat (100) is rotatably disposed on a vehicle body of the vehicle. The limiting assembly (200) is connected to the seat (100), and includes a locked state and an unlocked state. When the limiting assembly (200) is in the locked state, the seat (100) is prevented from rotating relative to the vehicle body, and when the limiting assembly (200) is in the unlocked state, the seat (100) is allowed to rotate relative to the vehicle body. The limiting sensor (300) is configured for detecting a state of the limiting assembly (200). The control device (400) is connected to the limiting sensor (300) and the seat (100), and is configured for controlling the seat (100) to rotate in response to rotation trigger information input by a user, where if the limiting sensor (300) detects that the limiting assembly (200) is in the locked state, the limiting assembly (200) is controlled to be switched to the unlocked state, and after the limiting assembly (200) is switched to the unlocked state, the seat (100) is controlled to rotate. The vehicle seat system detects a state of the limiting assembly (200) by providing the limiting sensor (300), so that good cooperation between the rotation of the seat and the limiting assembly is realized, thereby improving the experience of users rotating the seat.

## Description

### CROSS-REFERENCE TO RELATED APPLICATIONS

The present disclosure claims priority to Chinese Patent Application No. 202310880960.0, filed on July 17, 2023, which is incorporated herein by reference in its entirety.

### TECHNICAL FIELD

The present disclosure relates to, but is not limited to, the field of vehicle technologies, and in particular to a vehicle seat system and a vehicle.

### BACKGROUND

With the popularization of vehicles, users have more diversified riding requirements for vehicles, and a rotating seat is a scheme that can improve riding comfort and make vehicles have multi-scenario applications and multi-space layouts.

### SUMMARY

The following is a summary of subject matter described in detail herein. This summary is not intended to limit the scope of protection of the claims.

The present disclosure provides a vehicle seat system and a vehicle, which can improve an accuracy of determining a state of a limiting assembly.

An aspect of the present disclosure provides a vehicle seat system, including: a seat, rotatably disposed on a vehicle body of a vehicle; a limiting assembly, connected to the seat and including a locked state and an unlocked state, where when the limiting assembly is in the locked state, the seat is prevented from rotating relative to the vehicle body, and when the limiting assembly is in the unlocked state, the seat is allowed to rotate relative to the vehicle body; a limiting sensor, configured for detecting a state of the limiting assembly; and a control device, connected to the limiting sensor and the seat, and configured for controlling, in response to rotation trigger information input by a user, the limiting assembly to switch to the unlocked state if the limiting sensor detects that the limiting assembly is in the locked state, and controlling the seat to rotate after the limiting assembly is switched to the unlocked state.

According to the vehicle seat system provided in the present disclosure, the limiting sensor is provided to detect the state of the limiting assembly, thereby improving the accuracy of determining the state of the limiting assembly. In this way, good cooperation between rotation of the seat and the limiting assembly is realized, eliminating the need for the user to repeatedly rotate the seat for locking or unlocking, and thus enhancing the user experience of rotating the seat.

Optionally, the vehicle seat system further includes a rotating lower plate, the rotating lower plate is fixed to a vehicle body of the vehicle, the seat is rotatable relative to the rotating lower plate, the rotating lower plate is provided with a locking groove, the limiting assembly is rotatable relative to the rotating lower plate, the limiting assembly includes a first position and a second position, when the limiting assembly is in the first position, the limiting assembly is in the unlocked state, and when the limiting assembly is in the second position and the limiting assembly is located in the locking groove, the limiting assembly is in the locked state.

Optionally, the vehicle seat system further includes an unlocking actuator and a rotation actuator, where the unlocking actuator is connected to the limiting assembly and is configured for controlling the limiting assembly to switch between the first position and the second position, and the rotation actuator is connected to the seat, and is configured for driving the seat to rotate relative to the vehicle body and driving the limiting assembly to rotate relative to the locking groove.

Optionally, the vehicle seat system further includes an operating device connected to the control device, the operating device being operated by the user to output the rotation trigger information, where the control device is further configured for controlling the seat to stop rotating in response to the operating device stopping outputting the rotation trigger information.

Optionally, the control device is configured for: in response to the rotation trigger information, if the limiting assembly is in the second position, controlling the unlocking actuator to operate to drive the limiting assembly to switch to the first position; controlling the rotation actuator to operate to drive the seat to rotate; and if the operating device stops outputting the rotation trigger information, controlling the rotation actuator to stop operating, and controlling the unlocking actuator to operate, so that the limiting assembly is switched to the second position.

Optionally, the vehicle seat system further includes an input device connected to the control device, the input device being configured for receiving target rotation angle information input by the user, where the control device is configured for determining a target rotation angle of the seat according to the target rotation angle information, and controlling the seat to rotate to the target rotation angle.

Optionally, the control device is configured for: if the locking groove is located on a rotation path of the limiting assembly rotating with the seat to the target rotation angle, controlling the unlocking actuator to operate to drive the limiting assembly to switch to the first position; controlling the rotation actuator to operate to drive the seat to rotate; and if the seat rotates to the target rotation angle, controlling the rotation actuator to stop operating and controlling the unlocking actuator to operate, so that the limiting assembly is switched to the second position.

Optionally, the control device is configured for: if the locking groove is located outside a rotation path of the limiting assembly rotating with the seat to the target rotation angle, controlling the unlocking actuator to place the limiting assembly in the second position; controlling the rotation actuator to operate to drive the seat to rotate; and controlling the rotation actuator to stop operating if the seat rotates to the target rotation angle.

Optionally, the seat includes an initial position, and when the seat is in the initial position, the seat is oriented directly towards a front of the vehicle body; and the target rotation angle information includes a target position, and the control device is configured for determining the target rotation angle according to an angle of the target position relative to the initial position.

Optionally, the control device is configured for: in response to a gear shift request input by the user, if the limiting sensor detects that the limiting assembly is in the unlocked state, controlling the limiting assembly to switch to the locked state.

Optionally, the limiting assembly includes a locking pin and a limiting hole, the locking pin is movably disposed in the limiting hole, the limiting hole includes a first side and a second side, and when the locking pin is located on the first side of the limiting hole, the limiting assembly is in the unlocked state; when the locking pin is located on the second side of the limiting hole and the locking pin rotates out of the locking groove, the limiting assembly is in the unlocked state; and when the locking pin is located on the second side of the limiting hole and the locking pin rotates into the locking groove, the limiting assembly is in the locked state.

Optionally, the locking groove includes a first locking groove and a second locking groove, the first locking groove and the second locking groove being disposed opposite to each other on the rotating lower plate; where the limiting sensor includes a first limiting sensor and a second limiting sensor, the first limiting sensor is disposed close to the first locking groove to detect whether the locking pin falls into the first locking groove, and the second limiting sensor is disposed close to the second locking groove to detect whether the locking pin falls into the second locking groove.

Optionally, the vehicle seat system further includes a rotating upper plate connected to the seat and disposed opposite to the rotating lower plate, where when the seat rotates relative to the vehicle body, the rotating upper plate rotates relative to the rotating lower plate, where the limiting assembly further includes an unlocking rope and a locking coil spring, the unlocking rope is connected between the unlocking actuator and the locking pin, and the locking coil spring is connected between the rotating upper plate and the locking pin.

Optionally, the limiting assembly further includes a fixing bar, and a rotating shaft connected between the fixing bar and the rotating upper plate, the locking pin is connected to the fixing bar, and the fixing bar is rotatable about the rotating shaft, so that the locking pin is movable relative to the limiting hole.

Another aspect of the present disclosure provides a vehicle, including the vehicle seat system according to any one of the foregoing.

Other aspects will become apparent upon reading and understanding the drawings and detailed description.

### BRIEF DESCRIPTION OF DRAWINGS

The drawings herein, which are incorporated into and constitute a part of this specification, illustrate embodiments consistent with the present disclosure, and are used in conjunction with the specification to explain the principles of the present disclosure.
FIG. 1 illustrates a system block diagram of a vehicle seat system according to an embodiment of the present disclosure.
FIG. 2 illustrates a schematic structural diagram of the vehicle seat system shown in FIG. 1.
FIG. 3 illustrates a control schematic diagram of the vehicle seat system shown in FIG. 1 according to an embodiment.
FIG. 4 illustrates a control schematic diagram of the vehicle seat system shown in FIG. 1 according to another embodiment.
FIG. 5 illustrates a control schematic diagram of the vehicle seat system shown in FIG. 1 according to still another embodiment.
FIG. 6 illustrates a control schematic diagram of the vehicle seat system shown in FIG. 1 according to yet another embodiment.
FIG. 7 illustrates a schematic flowchart of a control method for the vehicle seat system shown in FIG. 1.
FIG. 8 illustrates a schematic flowchart of step S340 of the control method for the vehicle seat system shown in FIG. 7 according to an embodiment.
FIG. 9A, FIG. 9B and FIG. 9C illustrate schematic flowcharts of step S600 of the control method for the vehicle seat system shown in FIG. 7 according to an embodiment.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with the present disclosure. Instead, they are merely examples of apparatuses and methods consistent with some aspects of the present disclosure as detailed in the appended claims.

Terminology used herein is for the purpose of describing particular embodiments only, and is not intended to be limiting of the present disclosure. Unless otherwise defined, the technical terms or scientific terms used in the present disclosure should have the common meanings understood by those of ordinary skill in the art to which the present disclosure belongs. "First", "second", and similar words used in the specification and claims of the present disclosure do not indicate any order, quantity, or importance, but are merely used to distinguish between different components. Similarly, words such as "a" or "an" do not indicate quantity limitation, but indicate the presence of at least one. "A plurality of" or "several" indicate two or more. Unless otherwise indicated, words such as "front", "rear", "lower" and/or "upper", "top", "bottom" and the like are only for convenience of description, and are not limited to one position or one spatial orientation. Words such as "include" or "comprise" indicate that elements or objects before "include" or "comprise" cover elements or objects listed after "include" or "comprise" and their equivalents, and do not exclude other elements or objects. Words such as "connect" or "couple" are not limited to physical or mechanical connections, and may include electrical connections, whether direct or indirect.

The singular forms "a", "said" and "the" used in the specification of the present disclosure and the appended claims are also intended to include plural forms, unless the context clearly indicates otherwise. It should also be understood that the term "and/or" as used herein refers to and encompasses any or all possible combinations of one or more of the associated listed items.

At present, a rotating seat is mostly manually controlled, resulting in a low accuracy in determining a locked state and an unlocked state of a limiting assembly. A user needs to rotate the seat back and forth multiple times, leading to a poor user experience.

In view of this, the present disclosure provides a vehicle seat system and a vehicle. The vehicle seat system includes a seat, a limiting assembly, a limiting sensor, and a control device. The seat is rotatably disposed on a vehicle body of the vehicle. The limiting assembly is connected to the seat, and includes a locked state and an unlocked state. When the limiting assembly is in the locked state, the seat is prevented from rotating relative to the vehicle body, and when the limiting assembly is in the unlocked state, the seat is allowed to rotate relative to the vehicle body. The limiting sensor is configured for detecting a state of the limiting assembly. The control device is connected to the limiting sensor and the seat, and is configured for controlling the seat to rotate in response to rotation trigger information input by a user, where if the limiting sensor detects that the limiting assembly is in the locked state, the limiting assembly is controlled to be switched to the unlocked state, and after the limiting assembly is switched to the unlocked state, the seat is controlled to rotate.

According to the vehicle seat system provided in the present disclosure, the limiting sensor is provided to detect the state of the limiting assembly, thereby improving the accuracy of determining the state of the limiting assembly. In this way, good cooperation between rotation of the seat and the limiting assembly is realized, eliminating the need for the user to repeatedly rotate the seat for locking or unlocking, and thus enhancing the user experience of rotating the seat.

The vehicle provided in the present disclosure includes the vehicle seat system.

The vehicle seat system and the vehicle of the present disclosure will be described in detail below with reference to the accompanying drawings. Unless otherwise contradictory, features in the following embodiments and implementations may be combined with each other.

The vehicle according to an embodiment of the present disclosure includes the vehicle seat system 10. The vehicle includes, but is not limited to, a sedan, an SUV, an off-road vehicle, or other power-driven, non-rail-borne vehicles. The power source of the vehicle may be fuel or a power battery, which is not limited by the present disclosure.

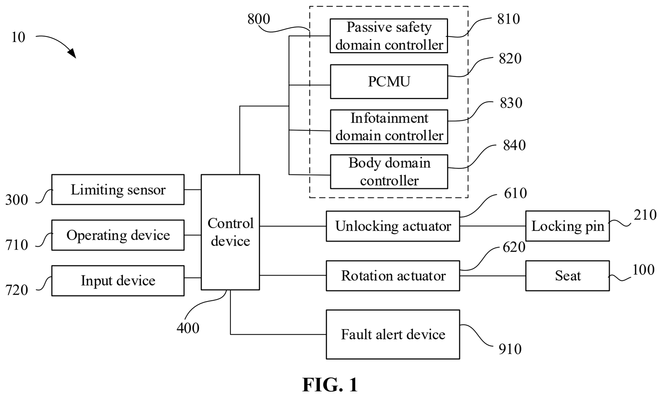

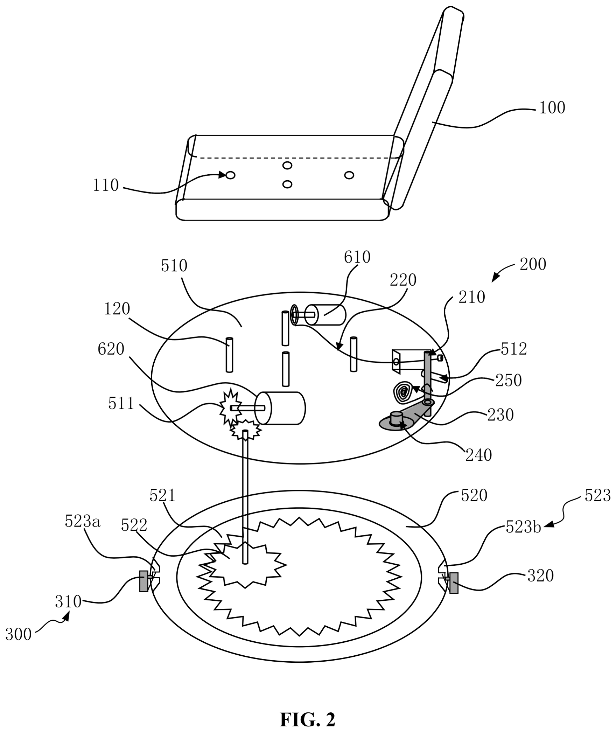

FIG. 1 illustrates a system block diagram of a vehicle seat system 10 according to an embodiment of the present disclosure. FIG. 2 illustrates a schematic structural diagram of the vehicle seat system 10 shown in FIG. 1. The vehicle seat system 10 according to the embodiment of the present disclosure includes a seat 100, a limiting assembly 200, a limiting sensor 300, and a control device 400. The seat 100 is rotatably disposed on a vehicle body of the vehicle. For example, the seat 100 may rotate forward and rearward relative to the vehicle body. The limiting assembly 200 is connected to the seat 100, and includes a locked state and an unlocked state. When the limiting assembly 200 is in the locked state, the seat 100 is prevented from rotating relative to the vehicle body, and when the limiting assembly 200 is in the unlocked state, the seat 100 is allowed to rotate relative to the vehicle body. The limiting sensor 300 is configured for detecting a state of the limiting assembly 200. The control device 400 is connected to the limiting sensor 300 and the seat 100, and is configured for controlling the seat 100 to rotate in response to rotation trigger information input by the user, where if the limiting sensor 300 detects that the limiting assembly 200 is in the locked state, the control device 400 controls the limiting assembly 200 to switch to the unlocked state, and controls the seat 100 to rotate after the limiting assembly 200 is switched to the unlocked state. According to the vehicle seat system 10 in the embodiment of the present disclosure, the limiting sensor 300 is provided to detect the state of the limiting assembly 200, thereby improving the accuracy of determining the state of the limiting assembly 200. In this way, good cooperation between rotation of the seat 100 and the limiting assembly 200 is realized, eliminating the need for the user to repeatedly rotate the seat 100 for locking or unlocking, and thus enhancing the user experience of rotating the seat 100.

It should be noted that the seat 100 may rotate forward and rearward around a central axis of the seat 100 relative to the vehicle body. The seat 100 may rotate from facing the front of the vehicle to facing the rear of the vehicle. The rotatable seat 100 can improve the ride comfort of the user, and make the vehicle have multi-scenario applications and multi-space layouts. A rotatable angle range of the seat 100 may include 0° to 360°, 0° to 270°, 0° to 180°, and other angle ranges, which is not limited by the present disclosure. The seat 100 may rotate clockwise or counterclockwise in a horizontal direction. A rotation strategy of the seat 100 may be determined according to a current position and a target position of the seat 100, or the user may customize a rotation direction to conveniently and quickly rotate the seat 100 to the target position. The rotation trigger information is a rotation control command sent by the user to the vehicle seat system 10, and may include, but is not limited to, rotation angle information, rotation speed information, rotation direction information, and other information for controlling the seat 100 to rotate. The limiting sensor 300 may include a micro switch.

As shown in FIG. 2, in some embodiments, the vehicle seat system 10 includes a rotating upper plate 510. The seat 100 may be further provided with a plurality of bolt holes 110, and the rotating upper plate 510 is connected to the seat 100 through fixing bolts 120. However, a connection mode between the rotating upper plate 510 and the seat 100 is not limited to bolt connection, and may also include rivet connection, welding, and other connection modes. It should be noted that a shape of the rotating upper plate 510 is not limited to the shape shown in FIG. 2. When the seat 100 rotates relative to the vehicle body, the seat 100 drives the rotating upper plate 510 to rotate relative to the vehicle body.

In some embodiments, the vehicle seat system 10 includes a rotating lower plate 520, the rotating lower plate 520 is fixed to the vehicle body of the vehicle, and the seat 100 is rotatable relative to the rotating lower plate 520. The rotating upper plate 510 and the rotating lower plate 520 are disposed opposite to each other. When the seat 100 rotates relative to the vehicle body, the rotating upper plate 510 rotates relative to the rotating lower plate 520. The rotating lower plate 520 is provided with a locking groove 523. The limiting assembly 200 is rotatable relative to the rotating lower plate 520, and includes a first position and a second position. When the limiting assembly 200 is in the first position, the limiting assembly 200 is in the unlocked state. When the limiting assembly 200 is in the second position, and the limiting assembly 200 is located in the locking groove 523, the limiting assembly 200 is in the locked state.

In some embodiments, the limiting assembly 200 may include a locking pin 210 and a limiting hole 512, the locking pin 210 is located in the limiting hole 512, and the locking pin 210 is movable in the limiting hole 512. The limiting hole 512 includes an inner side and an outer side. When the locking pin 210 is located on the inner side of the limiting hole 512, the limiting assembly 200 is in the first position; and when the locking pin 210 is located on the outer side of the limiting hole 512, the limiting assembly 200 is in the second position. The inner side and outer side of the limiting hole 512 are defined with respect to the rotating upper plate 510. As shown in FIG. 2, the inner side of the limiting hole 512 is close to a center of the rotating upper plate 510, and the outer side of the limiting hole 512 is close to an edge of the rotating upper plate 510.

Referring to FIG. 2, the locking groove 523 may be provided at an edge of the rotating lower plate 520, and oriented towards a center of the rotating lower plate 520, so that the locking pin 210 can fall into the locking groove 523. When the locking pin 210 is located on the outer side of the limiting hole 512 and the locking pin 210 rotates into the locking groove 523, the limiting assembly 200 is in the locked state; and when the locking pin 210 is located on the outer side of the limiting hole 512 and the locking pin 210 rotates out of the locking groove 523, the limiting assembly 200 is in the unlocked state. When the locking pin 210 is located on the inner side of the limiting hole 512, the limiting assembly 200 remains in the unlocked state due to a relatively large distance between the locking pin 210 and the locking groove 523. The locking groove 523 may include a first locking groove 523a and a second locking groove 523b, and the first locking groove 523a and the second locking groove 523b are disposed opposite to each other on the rotating lower plate 520. Further, the limiting sensor 300 includes a first limiting sensor 310 and a second limiting sensor 320. The first limiting sensor 310 is disposed close to the first locking groove 523a, and the second limiting sensor 320 is disposed close to the second locking groove 523b, to respectively detect whether the locking pin 210 falls into the first locking groove 523a and the second locking groove 523b.

In some embodiments, the vehicle seat system 10 includes an unlocking actuator 610 and a rotation actuator 620. The unlocking actuator 610 is connected to the limiting assembly 200 for controlling the limiting assembly 200 to switch between the first position and the second position. The rotation actuator 620 is connected to the seat 100 for driving the seat 100 to rotate relative to the vehicle body, and thus driving the limiting assembly 200 to rotate relative to the locking groove 523. The unlocking actuator 610 may include an unlocking drive motor, and the rotation actuator 620 may include a rotation drive motor. The rotating upper plate 510 may include an upper plate driving gear 511, and the rotating lower plate 520 may include a lower plate driving ring gear 521 and a lower plate driving gear 522. Specifically, the rotation actuator 620 is connected to the upper plate driving gear 511, the upper plate driving gear 511 is in transmission connection with the lower plate driving gear 522 through a transmission rod, and the lower plate driving gear 522 is engaged with the lower plate driving ring gear 521, so that the rotation actuator 620 drives the seat 100 to rotate, and thus drives the rotating upper plate 510 to rotate relative to the rotating lower plate 520.

In some embodiments, the unlocking actuator 610 internally includes two stop positions: an unlock stop and a lock stop, which can implement stalling at the unlocked position and the locked position. When the unlocking actuator 610 rotates from the lock stop to the unlock stop and generates a stall signal, the unlocking actuator 610 completes unlocking; and when the unlocking actuator 610 rotates from the unlock stop to the lock stop and generates a stall signal, the unlocking actuator 610 completes locking.

On the basis of the above embodiment, as shown in FIG. 2, the limiting assembly 200 further includes an unlocking rope 220 and a locking coil spring 250. The unlocking rope 220 is connected between the unlocking actuator 610 and the locking pin 210, and the locking coil spring 250 is connected between the rotating upper plate 510 and the locking pin 210. When the unlocking actuator 610 rotates forward, the unlocking actuator 610 pulls the unlocking rope 220. The unlocking rope 220 overcomes an elastic force of the locking coil spring 250 to drive the locking pin 210 to move close to the unlocking actuator 610, that is, the locking pin 210 moves towards the inner side of the limiting hole 512. In this case, the limiting assembly 200 is in the first position, and the limiting assembly 200 is in the unlocked state. When the limiting assembly 200 is in the first position and the unlocking actuator 610 rotates in reverse, the unlocking actuator 610 releases the unlocking rope 220. After the locking pin 210 loses a pulling force from the unlocking rope 220, the locking pin 210 moves towards the outer side of the limiting hole 512 under the elastic force of the locking coil spring 250, and remains in the outer position of the limiting hole 512. In some embodiments, the limiting assembly 200 includes a fixing bar 230, and a rotating shaft 240 connected between the fixing bar 230 and the rotating upper plate 510. The locking pin 210 is connected to the fixing bar 230, and the fixing bar 230 can rotate around the rotating shaft 240, so that the locking pin 210 can move relative to the limiting hole 512.

In some embodiments, the vehicle seat system 10 further includes an operating device 710 connected to the control device 400 for user operation. The control device 400 is configured for controlling the seat 100 to rotate in response to the rotation trigger information output by the operating device 710 when operated by the user. If the operating device 710 stops outputting the rotation trigger information, the control device 400 controls the seat 100 to stop rotating. Optionally, the operating device 710 includes a physical switch, such as a button. When the user presses the operating device 710, the control device 400 controls the seat 100 to rotate, and when the user releases the operating device 710, the control device 400 controls the seat 100 to stop rotating. There may be one or two operating devices 710. In an embodiment where there is one operating device 710, the operating device 710 may be rotated or pressed, that is, the rotation direction and the rotation angle of the seat 100 may be controlled. In an embodiment where there are two operating devices 710, the two operating devices 710 may respectively control the seat 100 to rotate in different directions. For example, the first operating device 710 may control the seat 100 to rotate in one of the counterclockwise direction and the clockwise direction, and the second operating device 710 may control the seat 100 to rotate in the other of the counterclockwise direction and the clockwise direction. In this way, learning costs of the user can be reduced, and the user can rotate the seat 100 more quickly. The operating device 710 may be located below the seat 100 to facilitate user operation.

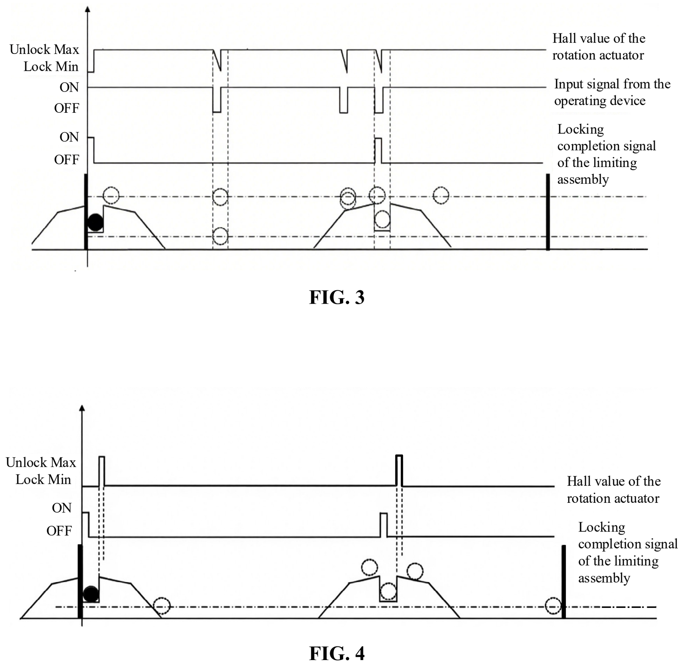

FIG. 3 illustrates a control schematic diagram of the vehicle seat system 10 shown in FIG. 1 according to an embodiment. In some embodiments, the control device 400 is configured for controlling, in response to the rotation trigger information, the unlocking actuator 610 to operate if the limiting assembly 200 is in the second position, so as to drive the limiting assembly 200 to switch to the first position. It can be understood that when the user presses the operating device 710, the unlocking actuator 610 rotates to pull the locking pin 210 to move from the outer side of the limiting hole 512 to the inner side of the limiting hole 512, and keep the locking pin 210 located on the inner side of the limiting hole 512 (i.e., the limiting assembly 200 is in the first position). After the limiting assembly 200 is in the first position, the rotation actuator 620 is controlled to operate to drive the seat 100 to rotate. When the locking pin 210 is located on the inner side of the limiting hole 512, the seat 100 is controlled to rotate, to prevent the locking pin 210 from falling into the locking groove 523 when the locking pin 210 passes by the locking groove 523 during rotation of the seat 100. If the operating device stops outputting the rotation trigger information, the rotation actuator 620 is controlled to stop operating, and the unlocking actuator 610 is controlled to operate, so that the limiting assembly 200 is switched to the second position. When the user releases the operating device 710, the seat 100 rotates to the target position, and stops rotating. Referring to FIG. 3, when the limiting assembly 200 is in the locked state, a Hall value of the rotation actuator 620 is "Lock Min"; and when the limiting assembly 200 is in the unlocked state, the Hall value of the rotation actuator 620 is "Unlock Max".

FIG. 4 illustrates a control schematic diagram of the vehicle seat system 10 shown in FIG. 1 according to another embodiment. In some embodiments, the vehicle seat system 10 further includes an input device 720 connected to the control device 400. The input device 720 is configured for receiving target rotation angle information input by the user, and the control device 400 is configured for determining a target rotation angle of the seat 100 according to the target rotation angle information, and controlling the seat 100 to rotate to the target rotation angle. Optionally, the input device 720 includes a central control display and a terminal device, where the terminal device may include a smartphone. The user inputs the target rotation angle information through the input device 720. The target rotation angle information may include the target rotation angle of the seat 100. Specifically, the seat 100 includes an initial position. When the seat 100 is in the initial position, the seat 100 is oriented directly towards the front of the vehicle body, and in this case, an initial position angle of the seat 100 may be defined as 0°. When the seat 100 is at any position within a rotation range, the control device 400 may acquire the angle of the seat 100 at this position. For example, when the seat 100 is oriented directly towards the rear of the vehicle body, the current angle of the seat 100 is 180°. The target rotation angle information may include the target position, and the control device 400 is configured for determining the target rotation angle of the seat 100 according to an angle of the target position relative to the initial position. In a specific embodiment, the seat 100 is currently oriented directly towards the front of the vehicle body, the user needs to make the seat 100 oriented towards a right side of the vehicle body, and the angle corresponding to the target position is 270°, that is, the seat 100 rotates to a 270° position and stops rotating. However, the rotation direction of the seat 100 may be set as desired, which will not be repeated herein.

In some embodiments, the control device 400 is configured for: if the locking groove 523 is located on a rotation path of the limiting assembly 200 rotating with the seat 100 to the target rotation angle, controlling the unlocking actuator 610 to operate to drive the limiting assembly 200 to switch to the first position, and when the limiting assembly 200 is in the first position, controlling the rotation actuator 620 to operate to drive the seat 100 to rotate; and if the seat 100 rotates to the target rotation angle, controlling the rotation actuator 620 to stop operating, and controlling the unlocking actuator 610 to operate to switch the limiting assembly 200 to the second position.

In some embodiments, the locking groove 523 may include the first locking groove 523a and the second locking groove 523b, and the first locking groove 523a and the second locking groove 523b are disposed opposite to each other. As shown in FIG. 2, the first locking groove 523a is located at a 0° position, and the second locking groove 523b is located at a 180° position. When (current rotation angle - 180°) * (target rotation angle - 180°) < 0, it is indicated that the current position of the seat 100 is neither at 0° nor 180°, and the seat needs to pass through either the 0° position or the 180° position to reach the target rotation angle. In this case, the locking pin 210 is controlled to be located on the inner side of the limiting hole 512, and after the seat 100 is controlled to rotate to the target rotation angle, the locking pin 210 is controlled to move to the outer side of the limiting hole 512.

In some embodiments, the control device 400 is configured for: if the locking groove 523 is located outside the rotation path of the limiting assembly 200 rotating with the seat 100 to the target rotation angle, controlling the unlocking actuator 610 to position the limiting assembly 200 in the second position, and when the limiting assembly 200 is in the second position, controlling the rotation actuator 620 to operate to drive the seat 100 to rotate; and if the seat 100 rotates to the target rotation angle, controlling the rotation actuator 620 to stop operating. When the seat 100 does not need to pass through the 180° position, that is, (current rotation angle - 180°) * (target rotation angle - 180°) ≥ 0, the locking pin 210 is controlled to be located on the outer side of the limiting hole 512, and the seat 100 is controlled to rotate to the target rotation angle.

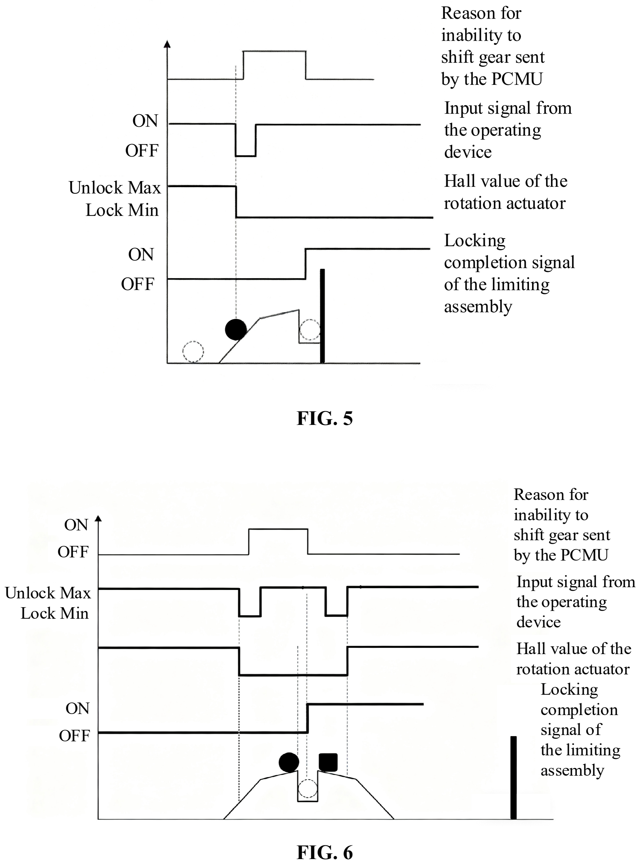

FIG. 5 illustrates a control schematic diagram of the vehicle seat system 10 shown in FIG. 1 according to still another embodiment. FIG. 6 illustrates a control schematic diagram of the vehicle seat system 10 shown in FIG. 1 according to yet another embodiment. In some embodiments, the control device 400 is configured for: in response to a gear shift request input by the user, controlling the limiting assembly 200 to switch to the locked state if the limiting sensor 300 detects that the limiting assembly 200 is in the unlocked state. When the user requests a gear shift, if the limiting assembly 200 is in the unlocked state, that is, the seat 100 is oriented towards a direction other than directly towards the front of the vehicle body and directly towards the rear of the vehicle body, the user is prevented from shifting gear, to prevent the vehicle from being started, thereby avoiding a safety hazard caused by operating the vehicle when the seat 100 does not return to a front-facing or rear-facing position. Referring to FIG. 5 and FIG. 6, if a P (Park) gear cannot be shifted out due to the current angle of the seat 100, the seat 100 is controlled to rotate, so that the limiting assembly 200 is switched from the unlocked state to the locked state. In this case, the operating device 710, for example, the physical switch, needs to be reset and triggered a second time before the seat 100 is allowed to rotate. It should be noted that PCMU is a Power and Chassis Master Unit.

In some embodiments, the vehicle seat system 10 includes a domain controller 800 connected to the control device 400. In some embodiments, the domain controller 800 includes, but is not limited to, a passive safety domain controller 810, a body domain controller 840, a PCMU 820, and an infotainment domain controller 830. In some embodiments, the passive safety domain controller 810 is connected to the control device 400 and an airbag, and the passive safety domain controller 810 is configured for controlling the airbag to be deactivated when the seat 100 is oriented towards the rear of the vehicle body.

In some embodiments, the body domain controller 840 is connected to the control device 400 and the input device 720, and after the user inputs the target rotation angle information through the input device 720, the body domain controller 840 sends the target rotation angle information to the control device 400, and the control device 400 is configured for controlling the seat 100 to rotate.

In some embodiments, the PCMU 820 is connected to the control device 400. After the user requests to shift gear, the PCMU 820 sends the gear shift request to the control device 400. The control device 400 determines whether the seat 100 returns to the front-facing or rear-facing position, and if the seat 100 does not return to the front-facing or rear-facing position, the control device 400 sends a seat-not-returned signal to the PCMU 820 to prohibit the vehicle from shifting to a driving gear, thereby ensuring driving safety.

In some embodiments, the infotainment domain controller 830 is connected to the control device 400 and a human-machine interface, and the infotainment domain controller 830 adjusts the human-machine interface according to the current position of the seat 100. Optionally, the infotainment domain controller 830 controls a display device to display the current position and angle of the seat 100 to improve the visibility of the rotation of the seat 100.

In some embodiments, the vehicle seat system 10 includes a fault alert device 910. When the sensor is in a fault state, the control device 400 is configured for controlling the fault alert device 910 to generate a fault alert message. In some embodiments, the fault alert device 910 includes one or more of a speaker, a display device, and a vibration feedback device. When the sensor of the rotation actuator is in the fault state, a voltage of the sensor is abnormal, and the control device 400 may determine whether the sensor of the rotation actuator is in the fault state through an electrical signal. Further, the control device 400 may determine whether the sensor of the rotation actuator is in the fault state by determining whether the Hall value of the rotation actuator 620 is normal or not. If the Hall value of the rotation actuator 620 is normal, the control device 400 determines that the sensor of the rotation actuator is in a normal operating state. If the Hall value of the rotation actuator 620 is abnormal, the control device 400 determines that the sensor of the rotation actuator is in the fault state, and controls the fault alert device 910 to generate the fault alert message.

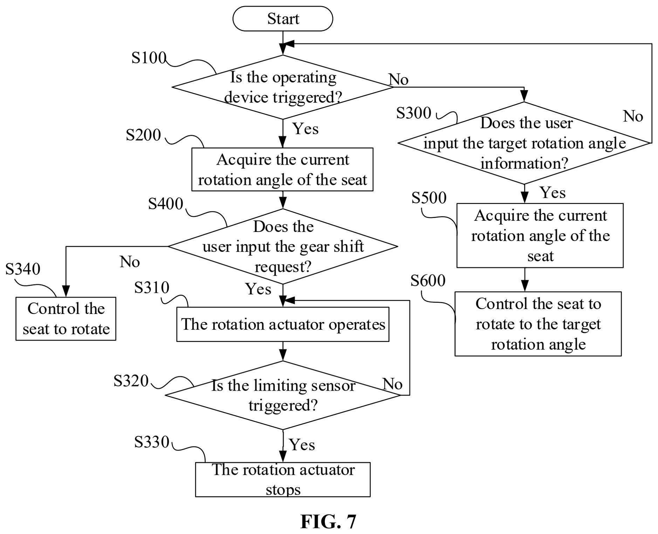

FIG. 7 illustrates a schematic flowchart of a control method for the vehicle seat system 10 shown in FIG. 1. The control method for the vehicle seat system according to an embodiment of the present disclosure includes steps S100 to S600.

At step S100, it is determined whether the operating device is triggered.

At step S200, if the operating device is triggered, the current rotation angle of the seat is acquired.

At step S300, if the operating device is not triggered, it is determined whether the user inputs the target rotation angle information.

At step S400, it is determined whether the user inputs the gear shift request.

At step S500, if the user inputs the target rotation angle information, the current rotation angle of the seat is acquired.

At step S600, the seat is controlled to rotate to the target rotation angle.

In some embodiments, step S400 includes steps S310 to S340.

At step S310, if the user inputs the gear shift request, the rotation actuator is controlled to operate.

At step S320, it is determined whether the limiting sensor is triggered.

At step S330, if the limiting sensor is triggered, the rotation actuator is controlled to stop.

At step S340, if the user does not input the gear shift request, the seat is controlled to rotate.

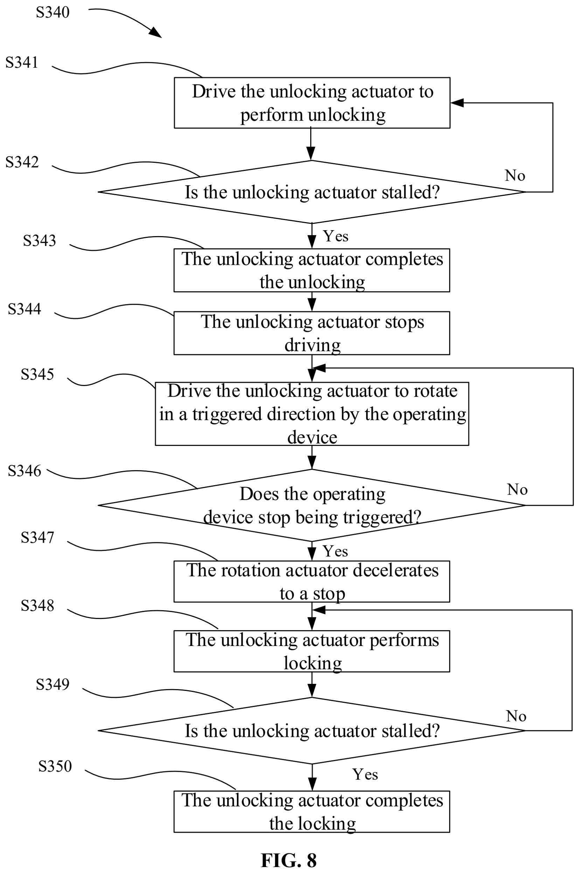

FIG. 8 illustrates a schematic flowchart of step S340 of the control method for the vehicle seat system 10 shown in FIG. 7 according to an embodiment. In some embodiments, step S340 includes step S341 to step S350.

At step S341, the unlocking actuator is driven to perform unlocking.

At step S342, it is determined whether the unlocking actuator is stalled.

At step S343, if the unlocking actuator is stalled, the unlocking actuator completes the unlocking.

At step S344, the unlocking actuator is controlled to stop driving.

At step S345, the unlocking actuator is driven to rotate in a triggered direction by the operating device.

At step S346, it is determined whether the operating device stops being triggered.

At step S347, if the operating device stops being triggered, the rotation actuator decelerates to a stop.

At step S348, the unlocking actuator is controlled to perform locking.

At step S349, it is determined whether the unlocking actuator is stalled.

At step S350, if the unlocking actuator is stalled, the unlocking actuator completes the locking.

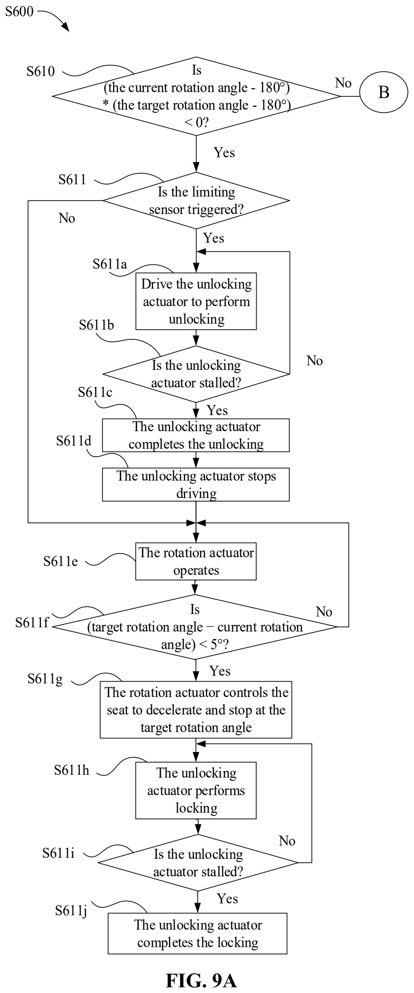

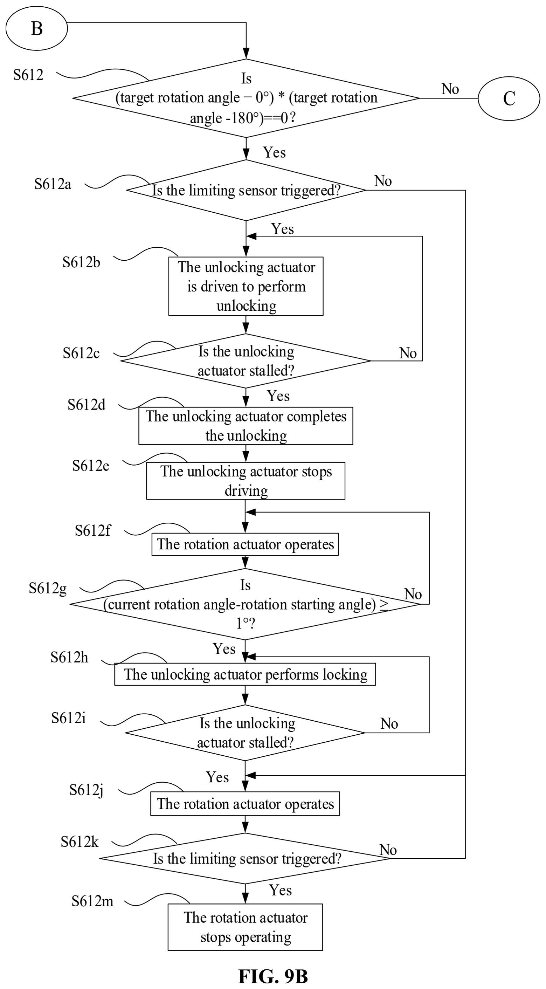

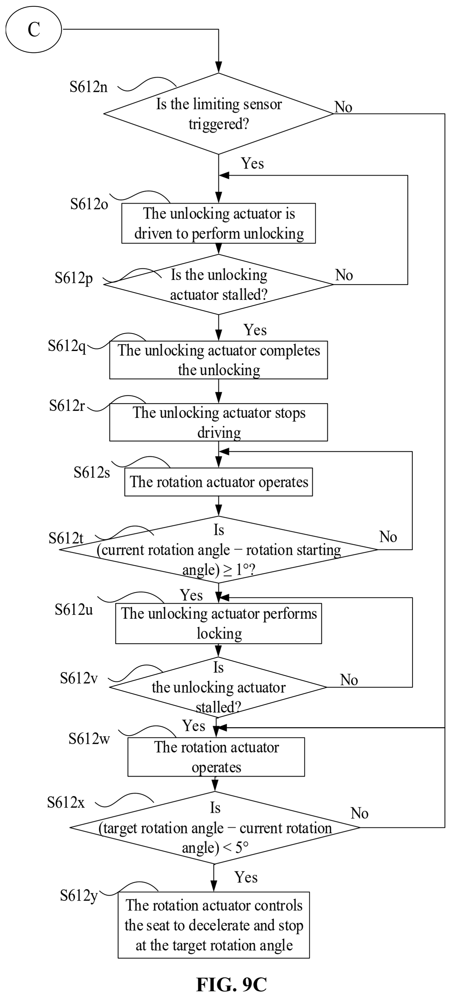

FIG. 9A, FIG. 9B, and FIG. 9C illustrate schematic flowcharts of step S600 of the control method for the vehicle seat system 10 shown in FIG. 7 according to an embodiment. In some embodiments, step S600 includes step S610.

At step S610, it is determined whether (current rotation angle - 180°) * (target rotation angle - 180°) < 0.

In some embodiments, step S610 includes step S611 and step S612.

At step S611, if (current rotation angle -180°) * (target rotation angle -180°) < 0, it is determined whether the limiting sensor is triggered.

At step S612, if (current rotation angle - 180°) * (target rotation angle - 180°) ≥ 0, it is determined whether (target rotation angle - 0°) * (target rotation angle -180°) is equal to 0.

In some embodiments, step S611 includes steps S611a to S611j.

At step S611a, if the limiting sensor is triggered, the unlocking actuator is driven to perform unlocking.

At step S611b, it is determined whether the unlocking actuator is stalled.

At step S611c, if the unlocking actuator is stalled, the unlocking actuator completes the unlocking.

At step S611d, the unlocking actuator is controlled to stop driving.

At step S611e, the rotation actuator is controlled to operate.

At step S611f, it is determined whether (target rotation angle - current rotation angle) < 5°.

At step S611g, if (target rotation angle - current rotation angle) < 5°, the rotation actuator controls the seat to decelerate and stop at the target rotation angle. In this way, when the seat is about to rotate to the target rotation angle, the rotation speed of the seat can be reduced, thereby improving the accuracy of the rotation angle of the seat. However, the difference between the target rotation angle and the current rotation angle may be re-determined based on an actual rotation speed of the seat or another parameter, which is not limited by the present disclosure.

At step S611h, the unlocking actuator is controlled to perform locking.

At step S611i, it is determined whether the unlocking actuator is stalled.

At step S611j, if the unlocking actuator is stalled, the unlocking actuator completes the locking.

In some embodiments, step S612 includes steps S612a to S612m and steps S612n to S612y.

At step S612a, if (target rotation angle - 0°) * (target rotation angle -180°) == 0, it is determined whether the limiting sensor is triggered.

At step S612b, if the limiting sensor is triggered, the unlocking actuator is driven to perform unlocking.

At step S612c, it is determined whether the unlocking actuator is stalled.

At step S612d, if the unlocking actuator is locked, the unlocking actuator completes the unlocking.

At step S612e, the unlocking actuator is controlled to stop driving.

At step S612f, the rotation actuator is controlled to operate.

At step S612g, it is determined whether (current rotation angle - rotation starting angle) ≥ 1°. In this way, it can be determined whether the locking pin moves out of the locking groove. The difference between the current rotation angle and the rotation starting angle may be re-determined according to an actual cooperation between the locking groove and the locking pin.

At step S612h, if (current rotation angle - rotation starting angle) ≥ 1°, the unlocking actuator is controlled to perform locking.

At step S612i, it is determined whether the unlocking actuator is stalled.

At step S612j, if the unlocking actuator is stalled, the rotation actuator is controlled to operate.

At step S612k, it is determined whether the limiting sensor is triggered.

At step S612m, if the limiting sensor is triggered, the rotation actuator is controlled to stop operating.

At step S612n, if (target rotation angle - 0°) * (target rotation angle -180°) is not equal to 0, it is determined whether the limiting sensor is triggered.

At step S612o, if the limiting sensor is triggered, the unlocking actuator is driven to perform unlocking.

At step S612p, it is determined whether the unlocking actuator is stalled.

At step S612q, if the unlocking actuator is stalled, the unlocking actuator completes the unlocking.

At step S612r, the unlocking actuator is controlled to stop driving.

At step S612s, the rotation actuator is controlled to operate.

At step S612t, it is determined whether (current rotation angle - rotation starting angle) ≥ 1°. In this way, it can be determined whether the locking pin moves out of the locking groove. The difference between the current rotation angle and the rotation starting angle may be re-determined according to the actual cooperation between the locking groove and the locking pin.

At step S612u, if (current rotation angle - rotation starting angle) ≥ 1°, the unlocking actuator is controlled to perform locking.

At step S612v, it is determined whether the unlocking actuator is stalled.

At step S612w, if the unlocking actuator is stalled, the rotation actuator is controlled to operate.

At step S612x, it is determined whether (target rotation angle - current rotation angle) < 5°.

At step S612y, if (target rotation angle - current rotation angle) < 5°, the rotation actuator controls the seat to decelerate and stop at the target rotation angle.

The vehicle seat system 10 provided in the present disclosure has relatively low costs, and the limiting assembly 200 can be accurately locked. The limiting assembly 200 can be switched to the locked state even if a fault occurs in the sensor of the rotation actuator, and rotation interruption caused by the locking pin 210 falling into the locking groove 523 during rotation of the seat can be avoided, thereby implementing electric control of the seat 100 and improving the user experience.

For the method embodiments, since the method embodiments substantially correspond to the device embodiments, reference may be made to the description of the device embodiments for relevant parts. The method embodiments and the device embodiments are complementary to each other.

The foregoing descriptions are merely some embodiments of the present disclosure, and are not intended to limit the present disclosure. Any modifications, equivalent substitutions, or improvements made without departing from the spirit and principle of the present disclosure shall fall within the protection scope of the present disclosure.

## Claims

1. A vehicle seat system, comprising:
a seat, rotatably disposed on a vehicle body of a vehicle;
a limiting assembly, connected to the seat and comprising a locked state and an unlocked state, wherein when the limiting assembly is in the locked state, the seat is prevented from rotating relative to the vehicle body, and when the limiting assembly is in the unlocked state, the seat is allowed to rotate relative to the vehicle body;
a limiting sensor, configured for detecting a state of the limiting assembly; and
a control device, connected to the limiting sensor and the seat, wherein the control device is configured for controlling, in response to rotation trigger information input by a user, the limiting assembly to switch to the unlocked state if the limiting sensor detects that the limiting assembly is in the locked state, and controlling the seat to rotate after the limiting assembly is switched to the unlocked state.

2. The vehicle seat system according to claim 1, further comprising a rotating lower plate,
wherein the rotating lower plate is fixed to the vehicle body of the vehicle, and the seat is rotatable relative to the rotating lower plate,
wherein the rotating lower plate is provided with a locking groove, and the limiting assembly is rotatable relative to the rotating lower plate, and
wherein the limiting assembly comprises a first position and a second position, when the limiting assembly is in the first position, the limiting assembly is in the unlocked state, and when the limiting assembly is in the second position and the limiting assembly is located in the locking groove, the limiting assembly is in the locked state.

3. The vehicle seat system according to claim 2, further comprising an unlocking actuator and a rotation actuator,
wherein the unlocking actuator is connected to the limiting assembly and is configured for controlling the limiting assembly to switch between the first position and the second position, and
wherein the rotation actuator is connected to the seat, and is configured for driving the seat to rotate relative to the vehicle body and driving the limiting assembly to rotate relative to the locking groove.

4. The vehicle seat system according to claim 3, further comprising an operating device connected to the control device, the operating device being operated by the user to output the rotation trigger information,
wherein the control device is further configured for controlling the seat to stop rotating in response to the operating device stopping outputting the rotation trigger information.

5. The vehicle seat system according to claim 4, wherein the control device is configured for:
in response to the rotation trigger information, if the limiting assembly is in the second position, controlling the unlocking actuator to operate to drive the limiting assembly to switch to the first position;
controlling the rotation actuator to operate to drive the seat to rotate; and
in response to the operating device stopping outputting the rotation trigger information, controlling the rotation actuator to stop operating, and controlling the unlocking actuator to operate, so that the limiting assembly is switched to the second position.

6. The vehicle seat system according to claim 3, further comprising an input device connected to the control device, the input device being configured for receiving target rotation angle information input by the user,
wherein the control device is configured for determining a target rotation angle of the seat according to the target rotation angle information, and controlling the seat to rotate to the target rotation angle.

7. The vehicle seat system according to claim 6, wherein the control device is configured for:
in response to the locking groove being located on a rotation path of the limiting assembly rotating with the seat to the target rotation angle, controlling the unlocking actuator to operate to drive the limiting assembly to switch to the first position;
controlling the rotation actuator to operate to drive the seat to rotate; and
in response to the seat rotating to the target rotation angle, controlling the rotation actuator to stop operating, and controlling the unlocking actuator to operate, so that the limiting assembly is switched to the second position.

8. The vehicle seat system according to claim 6, wherein the control device is configured for:
in response to the locking groove being located outside a rotation path of the limiting assembly rotating with the seat to the target rotation angle, controlling the unlocking actuator to place the limiting assembly in the second position;
controlling the rotation actuator to operate to drive the seat to rotate; and
controlling the rotation actuator to stop operating if the seat rotates to the target rotation angle.

9. The vehicle seat system according to claim 6, wherein the seat comprises an initial position, and when the seat is in the initial position, the seat is oriented directly towards a front of the vehicle body; and
wherein the target rotation angle information comprises a target position, and the control device is configured for determining the target rotation angle according to an angle of the target position relative to the initial position.

10. The vehicle seat system according to any one of claims 1 to 9, wherein the control device is configured for: in response to a gear shift request input by the user, if the limiting sensor detects that the limiting assembly is in the unlocked state, controlling the limiting assembly to switch to the locked state.

11. The vehicle seat system according to any one of claims 3 to 9, wherein the limiting assembly comprises a locking pin and a limiting hole, and the locking pin is movably disposed in the limiting hole, and
wherein the limiting hole comprises a first side and a second side, and when the locking pin is located on the first side of the limiting hole, the limiting assembly is in the unlocked state; when the locking pin is located on the second side of the limiting hole and the locking pin rotates out of the locking groove, the limiting assembly is in the unlocked state; and when the locking pin is located on the second side of the limiting hole and the locking pin rotates into the locking groove, the limiting assembly is in the locked state.

12. The vehicle seat system according to claim 11, wherein the locking groove comprises a first locking groove and a second locking groove, the first locking groove and the second locking groove being disposed opposite to each other on the rotating lower plate; and
wherein the limiting sensor comprises a first limiting sensor and a second limiting sensor, the first limiting sensor is disposed close to the first locking groove to detect whether the locking pin falls into the first locking groove, and the second limiting sensor is disposed close to the second locking groove to detect whether the locking pin falls into the second locking groove.

13. The vehicle seat system according to claim 11 or 12, further comprising a rotating upper plate connected to the seat and disposed opposite to the rotating lower plate, wherein when the seat rotates relative to the vehicle body, the rotating upper plate rotates relative to the rotating lower plate, and
wherein the limiting assembly further comprises an unlocking rope and a locking coil spring, the unlocking rope is connected between the unlocking actuator and the locking pin, and the locking coil spring is connected between the rotating upper plate and the locking pin.

14. The vehicle seat system according to claim 13, wherein the limiting assembly further comprises a fixing bar, and a rotating shaft connected between the fixing bar and the rotating upper plate, and wherein the locking pin is connected to the fixing bar, and the fixing bar is rotatable about the rotating shaft, so that the locking pin is movable relative to the limiting hole.

15. A vehicle, comprising the vehicle seat system of any one of claims 1 to 14.
